# EUROPÄISCHE PATENTSCHRIFT

(11) **EP 2 799 183 B1**
(45) Veröffentlichungstag und Bekanntmachung des Hinweises auf die Patenterteilung: **12.10.2016**
(21) Anmeldenummer: 13190262.9
(22) Anmeldetag: 25.10.2013
(51) Int. Cl.: B23Q 1/34, B23Q 17/20, B23Q 17/22

(54) **Bearbeitungsvorrichtung mit einer Tasteinrichtung und einer Verstelleinrichtung**
Processing device with a feeler and an adjustment device
Dispositif d'usinage doté d'un palpeur et d'un dispositif de réglage

(30) Priorität: 02.05.2013 DE 102013208035
(43) Veröffentlichungstag der Anmeldung: 05.11.2014
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 0 587 102
- EP-A1- 2 392 438
- US-A1- 2004 089 376
- US-B2- 7 153 073

## Beschreibung

### Technisches Gebiet

Die vorliegende Erfindung betrifft eine Bearbeitungsvorrichtung mit einer Verstelleinrichtung gemäß Patentanspruch 1 oder Patentanspruch 2.

### Stand der Technik

Zur Bearbeitung von Werkstücken, die bevorzugt aus Holz, Holzwerkstoffen, Kunststoff oder dergleichen bestehen, werden oftmals Bearbeitungsvorrichtungen mit einem Bearbeitungswerkzeug und einem Tastmittel verwendet, wobei das Tastmittel das Bearbeitungswerkzeug entlang einer Werkstückkontur führt, um so während der Bearbeitung eine konstante Zustellpositionierung des Werkzeugs zu dem Werkstück zu ermöglichen. Derartige Vorrichtungen werden dabei häufig zur Bearbeitung von unterschiedlichen Werkstückabschnitten, die unter Umständen verschiedene Materialien aufweisen, bzw. zur Bearbeitung von unterschiedlichen Werkstücken eingesetzt, sodass eine Veränderung der Zustellpositionierung des Werkzeugs zum Werkstück häufig erforderlich ist, um so verschiedene Bearbeitungsvorgänge an verschiedenen Werkstücken durchführen zu können. Solche Verstellvorgänge erfordern eine Verstelleinrichtung, mittels der die relative Positionierung von Tastmittel zu Bearbeitungswerkzeug und damit von Bearbeitungswerkzeug zu Werkstück veränderbar ist.

Der Anmelderin sind Vorrichtungen der eingangs genannten Art mit derartigen Verstelleinrichtungen bekannt, bei denen die Verstellvorgänge über Achsmotoren und Verstellspindeln durchgeführt werden. Diese schraubgetriebeartigen Verstelleinrichtungen weisen dabei im Allgemeinen mindestens einen Motor, einen Regler, ein Getriebe, eine Verstellspindel und eine auf die Spindel aufgefädelte Spindelmutter auf, um so die rotatorische Bewegung des Motors in eine translatorische Bewegung zu wandeln, mit der eine Relativverschiebung zwischen Tastmittel und Bearbeitungswerkzeug ermöglicht wird.

Ferner bezieht sich die EP 2 392 438 A1 auf eine Vorrichtung mit einer Tastrolle und einem Werkzeug, bei der die Rotationsachse der Tastrolle relativ zum Werkzeug mittels eines Exzenters verstellbar ist.

Diese aus dem Stand der Technik bekannten Vorrichtungen weisen dabei jedoch die Nachteile einer relativ geringen Verstellgenauigkeit, was insbesondere bei Feinbearbeitungen zu Werkstückbeschädigungen führen kann, und relativ hoher Systemkosten auf.

### Darstellung der Erfindung

Es ist daher Aufgabe der vorliegenden Erfindung, eine Vorrichtung der eingangs genannten Art mit einer hohen Verstellgenauigkeit sowie geringen Systemkosten bereitzustellen.

Die Lösung der Aufgabe erfolgt durch die Vorrichtung des Patentanspruchs 1 oder des Patentanspruchs 2. Bevorzugte Ausgestaltungen ergeben sich aus den Unteransprüchen.

Der Erfindung liegt der Gedankte zur Grunde, dass die relativ geringe Verstellgenauigkeit der Vorrichtungen im Stand der Technik vor allem darin begründet liegt, dass diese eine relativ hohe Masse aufweisen. Diese relativ hohe Masse führt zu einer relativ hohen Verstelleinrichtungsträgheit und zu relativ hohen Startmomenten, die erforderlich sind, um die Haftreibung der Verstelleinrichtung im Ruhezustand zu überwinden und die Verstelleinrichtung in Bewegung zu versetzen. Beide Punkte tragen dazu bei, dass insbesondere bei Werkstückfeinbearbeitungen eine hierfür erforderliche Verstellgenauigkeit nicht bereitgestellt werden kann. Darüber hinaus liegen die relativ hohen Systemkosten der Vorrichtungen im Stand der Technik vor allem darin begründet, dass deren Einzelkomponenten relativ hohe Kosten aufweisen.

Aus diesem Grund wurde im Rahmen der vorliegenden Erfindung nach einer Möglichkeit gesucht, eine Bearbeitungsvorrichtung der eingangs genannten Art mit einer geringeren Masse, insbesondere einer geringeren Verstelleinrichtungsmasse, bereitzustellen, wobei dies unter der Randbedingung zu erfolgen hatte, dass die einzelnen Systemkomponenten relativ niedrige Kosten aufweisen.

Neben einem Bearbeitungswerkzeug zum Bearbeiten eines Werkstücks, einer Tasteinrichtung, mit der eine vorbestimmte Zustellpositionierung des Bearbeitungswerkzeugs zu einem sich in Bearbeitung befindenden Werkstückabschnitts erzielbar ist, und einer Fördereinrichtung zum Herbeiführen einer Relativbewegung zwischen Bearbeitungswerkzeug und Werkstück, ist hierfür erfindungsgemäß eine Mikroverstelleinrichtung erforderlich, mit der eine Relativverstellung zwischen dem Bearbeitungswerkzeug und der Tasteinrichtung erzielbar ist. So kann das Bearbeitungswerkzeug relativ zur Tasteinrichtung und/oder die Tasteinrichtung relativ zum Bearbeitungswerkzeug verstellt werden. Eine erfindungsgemäße Mikroverstelleinrichtung weist dabei ein relativ geringes Gewicht, eine hohe Verstellgenauigkeit sowie geringe Systemkosten auf, wobei die Verstellung bevorzugt nicht auf schweren und kostenintensiven Komponenten wie Motoren, Getriebe oder Spindeln basiert. Insbesondere weist eine erfindungsgemäße Mikroverstelleinrichtung eine Verstellgenauigkeit im 1/100 mm Bereich auf. Die Verstellgenauigkeit liegt besonders bevorzugt zwischen 0,01°mm und 0,02°mm.

Gemäß einer ersten Alternative der vorliegenden Erfindung weist die Mikroverstelleinrichtung dabei eine fluidbetätigte Verstelleinrichtung auf. In dieser Ausgestaltung ist die Relativverschiebung zwischen dem Bearbeitungswerkzeug und der Tasteinrichtung über ein Fluid herbeiführbar. Neben den zuvor für alle Ausgestaltungen geltenden Vorteilen, ermöglich diese Ausführungsform über deren Betriebsmedium darüber hinaus eine Dämpfung von potenziellen Schwingungen innerhalb des Verstellsystems, sodass sich diese nur begrenzt auf Bearbeitungswerkzeug und Tastmittel übertragen und damit das Risiko einer Werkstückbeschädigung minimiert wird.

Dabei weist die fluidbetätigte Verstelleinrichtung ein Fluidbehältnis mit mindestens einer elastisch verformbaren Begrenzungsfläche, die insbesondere als Membran ausgebildet ist, und eine Druckänderungseinrichtung zum Ändern eines Fluiddrucks in dem Fluidbehältnis auf. Ferner ist die Tasteinrichtung mit der elastisch verformbaren Begrenzungsfläche so verbunden, dass durch eine Druckänderung des Fluid in dem Fluidbehältnis eine Relativverschiebung zwischen zumindest einem Teil der elastisch verformbaren Begrenzungsfläche bzw. der Tasteinrichtung und dem Massenschwerpunkt des Fluidbehältnisses, der nährungsweise dessen Mittelpunkts entspricht, erzielbar ist. Solch eine Ausgestaltung führt zu dem Vorteil, dass die Verstelleinrichtung einen einfachen, kostengünstigen und besonders leichtgewichtigen Aufbau aufweist, der durch die niedrige Masse eine besonders hohe Verstellgenauigkeit ermöglicht und das Risiko einer Werkstückbeschädigung minimiert. Ferner ist über die Materialwahl der elastisch verformbaren Fläche ein Verhältnis zwischen Druckgradient über die elastisch verformbare Fläche und Auslenkungsbetrag der elastisch verformbaren Fläche einfach anzupassen, was zu einer hohen Variabilität dieser Ausgestaltung führt.

Dabei kann die Tasteinrichtung die elastisch verformbare Begrenzungsfläche sein. Dies bedeutet, dass die elastisch verformbare Begrenzungsfläche direkt auf das Werkstück tasten kann, ohne dass ein separates Tastelement zwischengeschaltet werden muss. Dies führt zu einem besonders einfachen, leichtgewichtigen, kompakten und kostengünstigen Aufbau, da so zwei Bauteile mit zwei unterschiedlichen Funktionen in einem Bauteil vereint werden.

Bevorzugt weist der Mittelpunkt der elastisch verformbaren Begrenzungsfläche bei einer Druckänderung eines Fluids in dem Fluidbehältnis den größten Verschiebungsbetrags aller Punkte der Begrenzungsfläche auf. Dies führt zu dem Vorteil, dass die elastisch verformbare Begrenzungsfläche eine gleichmäßige Verformung aufweist und damit eine einfache Korrelation zwischen Auslenkung der elastisch verformbaren Fläche und Druckänderung in dem Fluidbehältnis definiert ist. Besonders bevorzugt ist die Vorrichtung dabei so ausgestaltet, dass die Verschiebung des Mittelpunkts der elastisch verformbaren Fläche proportional zur Druckänderung in dem Fluidbehältnis ist. Dies wiederum führt zu einer einfachen Verstellpositionierung, da ein linearer Zusammenhang zwischen Eingangs- und Ausgangsgröße der Verstelleinrichtung vorliegt.

Gemäß einer weiteren bevorzugten Ausführungsform ist die elastisch verformbare Fläche im Ruhestand, bei dem der Fluiddruck in dem Fluidbehältnis gleich dem Umgebungsdruck ist, plan und weist keine Krümmung auf. Dies ermöglicht eine einfache und kostengünstige Eichung der Verstelleinrichtung.

Das Fluidbehältnis kann eine zylindrische Form aufweisen, wobei die Grundfläche und/oder die Deckfläche des Zylinders die elastische verformbare Fläche darstellt. Dies führt zu dem Vorteil, dass die elastisch verformbare Fläche einen kreisrunden Querschnitt aufweist, der einfach und kostengünstig herzustellen ist.

Gemäß einer weiteren bevorzugten Ausführungsform wird der Fluidruck in dem Fluidbehältnis über einen Zylinder und/oder ein Servodruckventil verändert. Beide Ausgestaltungen ermöglichen eine besonders günstige Druckanpassung, die jeweils eine geringe Masse und eine geringe Anzahl von Subkomponenten aufweist.

Gemäß einer weiteren bevorzugten Ausführungsform weist das Fluidbehältnis eine zylindrische Form auf und die Druckänderung in dem Fluidbehältnis erfolgt über einen Zylinder, wobei das Fluidbehältnis und der Zylinder als ein Bauteil bzw. als eine Baugruppe ausgestaltet sind. Diese Ausgestaltung ermöglicht einen besonders kompakten Bauraum der Bearbeitungsvorrichtung.

Gemäß einer weiteren bevorzugten Ausführungsform ist das Fluid flüssig, insbesondere ein Öl. Dies führt zu einer leichten Verstellpositionierung, auf Grund der Inkompressibilität eines flüssigen Fluid, da so ein einfacher Zusammenhand zwischen Volumen des Behältnisses und Druck in dem Behältnis gegeben ist.

Die Mikroverstelleinrichtung der zweiten Alternative der vorliegenden Erfindung weist einen Piezo- und/oder Tauchspulenaktor zum Herbeiführen einer Relativverstellung zwischen dem Bearbeitungswerkzeug und der Tasteinrichtung auf. Bei beiden Ausgestaltungen handelt es sich um besonders günstige Mikroverstelleinrichtungen, da diese jeweils als Standardkomponenten in einer großen Vielfalt von Ausgestaltungen erhältlich sind. Ferner ermöglicht deren Steuerung über eine Spannung eine besonders hohe Verstellgenauigkeit.

Das Bearbeitungswerkzeug kann eine Leimfugenziehklinge sein. Solch ein Werkzeug erfordert insbesondere bei leicht zu beschädigenden Oberflächen eine besonders hohe Verstellgenauigkeit.

Gemäß einer weiteren bevorzugten Ausführungsform ist die Tasteinrichtung als Tastschuh ausgestaltet, was zu dem Vorteil führt, dass die Tasteinrichtung eine verhältnismäßig große Auflagefläche auf einem Werkstück aufweist und damit der lokale Druck auf das Werkstück verhältnismäßig klein ist, was ein Beschädigungsrisiko einer Werkstückoberfläche minimiert.

Gemäß einer weiteren bevorzugten Ausführungsform weist die Vorrichtung ferner eine Regeleinrichtung und das Bearbeitungswerkzeug einen Drucksensor auf. Der Drucksensor ist dabei mit der Regeleinrichtung verbunden, sodass die Zustellpositionierung des Bearbeitungswerkzeugs zu einem sich in Bearbeitung befindenden Werkstück über den Drucksensor und die Mikroverstelleinrichtung über die Regeleinrichtung druckgeregelt werden kann. Dies führt zu dem Vorteil, dass beispielsweise bei eventueller altersbedingter Leckage eine Verstellgenauigkeit erhalten bleibt, da die Regelung der Zustellpositionierung über den Andrückdruck des Bearbeitungswerkzeugs an das Werkstück erfolgt. Darüber hinaus weist solch eine Ausgestaltung eine besonders gute Bearbeitungsqualität auf, da über die Druckregelung eine besonders genaue Zustellpositionierung des Bearbeitungswerkzeugs zu dem sich in Bearbeitung befindenden Werkstückabschnitt erzielbar ist. Diese hohe Genauigkeit ist dabei auch bei sich ändernden Randbedingungen, z.B. hohen Temperaturen und damit verbundenen Werkstückausdehnungen, erzielbar.

Gemäß einer weiteren bevorzugten Ausführungsform kann die Werkzeugverstellung während des Bearbeitungsbetriebs erfolgen, was eine dynamische Werkstückbearbeitung mit geringen Produktionszeiten und damit geringen Produktionskosten ermöglicht.

### Kurze Beschreibung der Zeichnungen

Figur 1 zeigt eine Seitenansicht des Verstelleinrichtungsbereichs der Bearbeitungsvorrichtung einer ersten Ausführungsform der vorliegenden Erfindung.
Figur 2 zeigt eine schematische Ansicht zum Illustrieren des Funktionsprinzips der Verstelleinrichtung der ersten Ausführungsform der vorliegenden Erfindung.
Figur 3 zeigt eine isometrische Ansicht des Verstelleinrichtungsbereichs der ersten Ausführungsform der vorliegenden Erfindung.
Figur 4 zeigt eine schematische Seitenansicht des Verstelleinrichtungsbereichs einer zweiten Ausführungsform der vorliegenden Erfindung.
Figur 5 zeigt eine schematische Seitenansicht des Verstelleinrichtungsbereichs einer dritten Ausführungsform der vorliegenden Erfindung.

### Detaillierte Beschreibung einer bevorzugten Ausführungsform

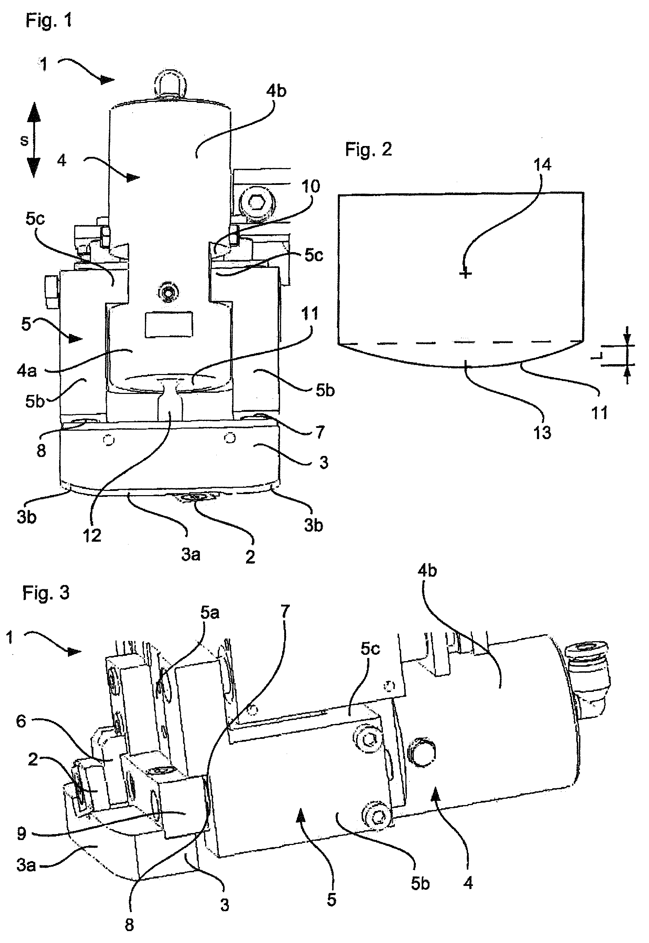

Im Folgenden werden bevorzugte Ausführungsformen der vorliegenden Erfindung unter Bezugnahme auf die Figuren 1 bis5 beschrieben.

Die Bearbeitungsvorrichtung 1 einer ersten bevorzugten Ausführungsform weist ein Bearbeitungswerkzeug 2, eine nicht gezeigte Fördereinrichtung zum Herbeiführen einer Relativbewegung zwischen einem Werkstück und dem Bearbeitungswerkzeug 2, eine Tasteinrichtung 3, mittels der eine vorbestimmte Zustellpositionierung des Bearbeitungswerkzeugs 2 zu einem sich in Bearbeitung befindenden Werkstückabschnitt erzielbar ist, einen Grundträger 5 und eine Mikroverstelleinrichtung 4, die eine fluidbestätigte Verstelleinrichtung 4 aufweist, auf.

Der Grundträger 5 ist im Querschnitt U-förmig ausgebildet, wobei die U-Form einen Basisbereich 5a, zwei gegenüberliegende Schenkelbereiche 5b sowie zwei an die Schenkelbereiche 5b angrenzende Spangenbereiche 5c aufweist.

Die Verstelleinrichtung 4 ist in der ersten vorliegenden Ausführungsform zylindrisch ausgestaltet und weist an deren Mantelfläche zwei gegenüberliegende Längsnuten 10 zur Aufnahme der Spangenbereiche 5c des U-förmigen Grundträgers 5 auf. Der U - förmige Grundträger 5 ist dabei über die Spangenbereiche 5c mit den Längsnuten 10 der Verstelleinrichtung 4 verschraubt, verklemmt oder auf sonstige Weise so verbunden, dass der Grundträger 5 und die Verstelleinrichtung 4 in eine Richtung s nicht relativ zueinander bewegbar sind.

Am Grundträger 5 ist ferner ein Werkzeughalter 6 montiert, welcher in die Richtung s ebenfalls nicht relativ zum Grundträger 5 verschiebbar ist, und an dem Werkzeughalter 6 ist ein Feinbearbeitungswerkzeug 2, insbesondere eine Leimfugenziehklinge, angebracht. Im Rahmen dieser Erfindung sind jedoch auch andere Werkzeuge wie beispielsweise eine Profilziehklinge, ein Fräswerkzeug, ein Kappwerkzeug oder ein Sägewerkzeug denkbar. Der Grundträger 5 weist ferner beispielsweise zwei Führungsbuchen 7 auf, die parallel zur Längserstreckungsrichtung der Schenkelbereiche 5b in den Schenkelbereichen 5b vorgesehen sind. In den Führungsbuchsen 7 ist jeweils ein Bolzen 8 angeordnet, der in die Richtung s bewegbar zum Grundträger 5 und damit zur Verstelleinrichtung 4 gelagert ist.

Die Bolzen 8 sind jeweils mit einem Tasteinrichtungsbasisstück 9 fest verbunden, das eine Erstreckungsrichtung senkrecht zur Erstreckungsrichtung der Führungsbuchsen 7 und der Längsnuten 10 aufweist. Das Tasteinrichtungsbasisstück 9 ist in der vorliegenden Ausführungsform fest mit einem Tastschuh 3 verbunden, dessen Erstreckungsrichtung parallel zu jener des Tasteinrichtungsbasisstücks 9 angeordnet ist. Der Tastschuh 3 weist im Querschnitt einen im Wesentlichen rechteckigen Querschnitt auf, wobei die Tastfläche im Querschnitt auch einen Radius aufweisen kann, und die Randzonen der Tastfläche 3a weisen jeweils eine Abrundung 3b auf. Diese Ausgestaltung führt dazu, dass eine Verschiebung der Bolzen 8 bzw. der Tasteinrichtungsbasisstücke 9 in die Richtung s relativ zum Grundträger 5 bzw. der Verstelleinrichtung 4 zu einer entsprechenden Relativverschiebung in die Richtung s der Tasteinrichtung 3 zum Bearbeitungswerkzeug 2 führt, das fest mit dem Grundträger 5 verbunden ist.

Die Verstelleinrichtung 4 gliedert sich in zwei Teilsysteme 4a und 4b, die voneinander durch einen Pneumatikzylinder getrennt sind, wobei das erste Teilsystem 4a an der dem Tastschuh 3 zugewandten Seite und das zweite Teilsystem 4b an der dem Tastschuh 3 abgewandten Seite der Verstelleinrichtung 4 angeordnet ist. In der vorliegenden Ausführungsform ist das Teilsystem 4a unterhalb der Längsnuten 10 angeordnet und als sogenannte Dehnbüchse ausgestaltet. Die Dehnbüchse 4a weist ebenfalls eine zylindrische Form auf und umfasst eine elastisch verformbare Begrenzungsfläche 11. Die elastisch verformbare Begrenzungsfläche 11 ist in der vorliegenden Ausführungsform als Membran ausgestaltet und bildet die Grundfläche der Dehnbüchse 4a aus. Das Teilsystem 4a ist in der vorliegenden Ausführungsform mit Öl gefüllt. Die Verstelleinrichtung 4 weist ferner ein Verbindungsstück 12 auf, das auf dessen einen Seite mittig mit der Membran 11 und auf dessen anderen Seite mit dem Tasteinrichtungsbasisstück 9 verbunden ist. Das zweite Teilsystem 4b der Verstelleinrichtung 4 ist in der vorliegenden Ausführungsform oberhalb der Längsnuten 10 der Verstelleinrichtung 4 angeordnet und mit Luft gefüllt. Dabei unterteilt der Pneumatikzylinder die Verstelleinrichtung und ist gegenüber der Mantelbegrenzungsfläche der Verstelleinrichtung 4 abgedichtet, sodass eine Bewegung des Pneumatikzylinders in Richtung s zu einer Druckänderung innerhalb der Dehnbüchse 4a führt.

Durch die Inkompressibilität des Öls in dem Teilsystem 4a ist eine Kraftregelung der Verstelleinrichtung möglich, bei der der Teil 4b mit einem bestimmten Druck über ein Druckregelventil beaufschlagt wird. Dieser Druck führt zu einer bestimmten Kraft auf den Zylinder, der sich daraufhin verschiebt und zu einer bestimmten Druckänderung in dem Teil 4a und einer entsprechenden Verschiebung der Membran führt.

Solch eine Druckänderung innerhalb der Dehnbüchse 4a führt zu einem Druckgradienten über die Membran 11, die sich daraufhin entsprechend verformt. Dabei ist die Dehnbüchse 4a in der vorliegenden Ausführungsform so ausgestaltet, dass der Mittelpunkt der Membran 13 den größten Verschiebebetrag L in Bezug auf den Massenschwerpunkt 14 der Dehnbüchse 4a aufweist, wie in Figur 2 gezeigt.

Die Bearbeitungsvorrichtung 1 weist ferner eine nicht gezeigte Regeleinrichtung und das Bearbeitungswerkzeug 2 einen nicht gezeigten Drucksensor auf. Die Regeleinrichtung ist dabei mit dem Pneumatikzylinder des Teilsystems 4b der Verstelleinrichtung 4 und dem Drucksensor verbunden.

Die Zustellung des Bearbeitungswerkzeugs 2 zu einem sich in Bearbeitung befindenden Werkstück wird in der vorliegenden Ausführungsform dabei druckgeregelt. Das bedeutet, dass die nicht gezeigte Regeleinrichtung eine Bewegung des Pneumatikzylinder in dem Teilsystem 4b so regelt, dass sich ein Druck in der Dehnbüchse 4a und eine entsprechende Verschiebung L des Mittelpunkts 13 der Membran 11 bzw. eine Relativverschiebung zwischen Bearbeitungswerkzeug 2 und Tasteinrichtung 3 so einstellt, dass das Bearbeitungswerkzeug 2 mit einem vorbestimmten Druck gegen ein zu bearbeitendes Werkstück drückt und so eine vorbestimmte Zustellpositionierung des Bearbeitungswerkzeugs 2 zu dem sich in Bearbeitung befindenden Werkstück erzielt wird.

Im Rahmen dieser Erfindung ist es ebenfalls denkbar, dass die elastisch verformbare Begrenzungsfläche des Fluidbehältnisses an dem Tastmittel anliegt, sodass eine Verformung der Begrenzungsfläche zu einer entsprechenden Verformung bzw. Verstellung der Tasteinrichtung führt.

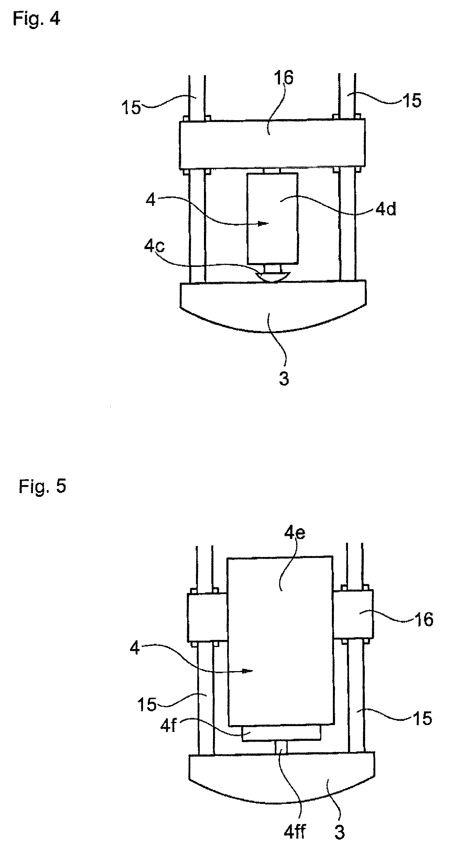

Figuren 4 und 5 zeigen eine zweite und dritte bevorzugte Ausführungsform der vorliegenden Erfindung. Die zweite und dritte bevorzugte Ausführungsform gleichen dabei der ersten bevorzugten Ausführungsform, mit Ausnahme der im Folgenden beschriebenen Unterschiede.

In der zweiten bevorzugten Ausführungsform, die in Figur 4 gezeigt ist, weist die Mikroverstelleinrichtung einen Piezoaktor 4 zum Relativverstellen der Tasteinrichtung 3 zu einem nicht gezeigten Bearbeitungswerkzeug auf. Der Piezoaktor 4 ist dabei bevorzugt länglich ausgestaltet und weist einen Grundkörper 4d sowie ein Verstellglied 4c auf. Das Verstellglied 4c ist dabei durch Anlegen einer Spannung an den Aktor 4 bevorzugt in die Längserstreckungsrichtung des Aktors relativ zum Grundkörper 4d verstellbar.

Dabei weist die zweite bevorzugte Ausführungsform ferner zwei parallel angeordnete Führungen 15, hier Führungsstangen, und einen Grundträger 16 auf, der zentriert zu den Führungsstangen 15 angeordnet und mit diesen fest verbunden ist. Der Tastschuh 3 ist ebenfalls zentriert zu den Führungsstangen 15 positioniert, wobei dieser auf den Führungsstangen 15 frei beweglich vorgesehen ist.

Der Piezoaktor 4 ist mittig zwischen den Führungsstangen 15 vorgesehen. Die Kopfseite des Verstellglieds 4c des Aktors 4 ist dabei über eine Anbindung mittig fest mit dem Tastschuh 3 und der Grundkörper 4d des Aktors 4 fest mit dem Grundträger 16 verbunden.

Durch das Beaufschlagen des Piezoaktors 4 mit einer Spannung, wird somit der Tastschuh 3 durch das Verstellglied 4c des Aktors 4 relativ zum Grundkörper 4d und den Grundträger 16 bewegt. Durch solch einen Verstellvorgang ist der Abstand zwischen dem Tastschuh 3 und einem nicht gezeigten Bearbeitungswerkzeug veränderbar.

Figur 5 zeigt eine dritte bevorzugte Ausführungsform. Die dritte bevorzugte Ausführungsform ist mit Ausnahme der im Folgenden beschriebenen Unterschiede analog zur zweiten bevorzugten Ausführungsform ausgestaltet.

Die dritte bevorzugte Ausführungsform weist eine Mikroverstelleinrichtung auf, die einen Tauchspulenaktor 4 umfasst. Der Tauchspulenaktor 4 ist aus einem Außenkörper 4e und einer Tauchspule 4f ausgestaltet, die bevorzugt konzentrisch in dem Außenkörper 4e angeordnet ist. Der Aktor 4 ist ferner mittig zwischen den Führungsstangen 15 angeordnet. Der Außenkörper 4e ist fest bevorzugt mittels Umgreifen mit dem Grundträger 16 verbunden. Die Tauchspule 4f ist fest über eine Anbindung 4ff bevorzugt mittig mit dem Tastschuh 3 verbunden.

Durch das Beaufschlagen des Tauchspulenaktors 4 mit einer Spannung, wird die Tauchspule 4f relativ zum Außenkörper 4e verstellt. Da die Tauchspule 4f fest mit dem Tastschuh 3 und der Außenkörper 4e fest mit dem Grundträger 16 verbunden ist, wird der Tastschuh 3 dabei relativ zum Grundträger 16 bewegt. Durch solch einen Verstellvorgang ist der Abstand zwischen dem Tastschuh 3 und einem nicht gezeigten Bearbeitungswerkzeug veränderbar.

## Patentansprüche

1. Bearbeitungsvorrichtung für ein Werkstück, wobei das Werkstück bevorzugt zumindest abschnittsweise aus Holz, Holzwerkstoffen, Kunststoff oder dergleichen besteht, mit:
einem Bearbeitungswerkzeug (2) zum Bearbeiten eines Werkstücks;
einer Tasteinrichtung (3) mittels der eine vorbestimmte Zustellpositionierung des Bearbeitungswerkzeugs (2) zu einem sich in Bearbeitung befindenden Werkstückabschnitt erzielbar ist;
einer Fördereinrichtung zum Herbeiführen einer Relativbewegung zwischen Bearbeitungswerkzeug (2) und Werkstück;
wobei die Vorrichtung ferner eine Mikroverstelleinrichtung (4) aufweist, mittels der eine Relativverstellung zwischen dem Bearbeitungswerkzeug (2) und der Tasteinrichtung (3) erzielbar ist,
**dadurch gekennzeichnet, dass**
die Mikroverstelleinrichtung (4) eine fluidbetätigte Verstelleinrichtung aufweist, sodass die Relativverschiebung über ein Fluid herbeiführbar ist, und die Mikroverstelleinrichtung (4) ein Fluidbehältnis mit mindestens einer elastisch verformbaren Begrenzungsfläche (11), insbesondere Membran, und eine Druckänderungseinrichtung zum Ändern eines Fluiddrucks in dem Fluidbehältnis aufweist, wobei die Tasteinrichtung (3) mit der elastisch verformbaren Begrenzungsfläche (11) verbunden ist und durch eine Druckänderung eines Fluides in dem Fluidbehältnis eine Relativverschiebung zwischen zumindest einem Teil der elastisch verformbaren Begrenzungsfläche (11) und dem Massenschwerpunkt (14) des Fluidbehältnisses erzielbar ist.

2. Bearbeitungsvorrichtung für ein Werkstück, wobei das Werkstück bevorzugt zumindest abschnittsweise aus Holz, Holzwerkstoffen, Kunststoff oder dergleichen besteht, mit:
einem Bearbeitungswerkzeug (2) zum Bearbeiten eines Werkstücks;
einer Tasteinrichtung (3) mittels der eine vorbestimmte Zustellpositionierung des Bearbeitungswerkzeugs (2) zu einem sich in Bearbeitung befindenden Werkstückabschnitt erzielbar ist;
einer Fördereinrichtung zum Herbeiführen einer Relativbewegung zwischen Bearbeitungswerkzeug (2) und Werkstück;
wobei die Vorrichtung ferner eine Mikroverstelleinrichtung (4) aufweist, mittels der eine Relativverstellung zwischen dem Bearbeitungswerkzeug (2) und der Tasteinrichtung (3) erzielbar ist,
**dadurch gekennzeichnet, dass**
die Mikroverstelleinrichtung einen Piezoaktor und/oder einen Tauchspulenaktor zum Herbeiführen einer Relativverstellung zwischen dem Bearbeitungswerkzeug (2) und der Tasteinrichtung (3) aufweist.

3. Bearbeitungsvorrichtung nach Anspruch 1, **dadurch gekennzeichnet, dass** die Tasteinrichtung (3) die elastisch verformbare Begrenzungsfläche (11) ist.

4. Bearbeitungsvorrichtung nach Anspruch 1 oder 3, **dadurch gekennzeichnet, dass** der Mittelpunkt (13) der elastisch verformbaren Begrenzungsfläche (11) bei einer Druckänderung eines Fluides in dem Fluidbehältnis den größten Verschiebungsbetrag (L) aller Punkte der Begrenzungsfläche (11) aufweist, und die Verschiebung des Mittelpunkts bevorzugt proportional zur Druckänderung in dem Fluidbehältnis ist.

5. Bearbeitungsvorrichtung nach einem der Ansprüche 1, 3 und 4, **dadurch gekennzeichnet, dass** die elastisch verformbare Fläche (11) im Ruhezustand, bei dem der Fluiddruck in dem Fluidbehältnis gleich dem Umgebungsdruck ist, plan ist und keine Krümmung aufweist.

6. Bearbeitungsvorrichtung nach einem der Ansprüche 1, 3, 4 und 5, **dadurch gekennzeichnet, dass** das Fluidbehältnis eine zylindrische Form aufweist und die Grundfläche und/oder Deckfläche des Zylinders die elastisch verformbare Fläche darstellt.

7. Bearbeitungsvorrichtung nach einem der Ansprüche 1 und 3 bis 6, **dadurch gekennzeichnet, dass** die Druckänderung in dem Fluidbehältnis über einen Zylinder und/oder ein Servodruckventil erfolgt.

8. Bearbeitungsvorrichtung nach den Ansprüchen 6 und 7, **dadurch gekennzeichnet, dass** das Fluidbehältnis eine zylindrische Form aufweist und die Druckänderung über einen Zylinder erfolgt, wobei das Fluidbehältnis und der Zylinder als ein Bauteil bzw. eine Baugruppe ausgebildet sind.

9. Bearbeitungsvorrichtung nach einem der Ansprüche 1 und 3 bis 8, **dadurch gekennzeichnet, dass** das Fluid flüssig, insbesondere Öl, ist.

10. Bearbeitungsvorrichtung nach einem der vorherigen Ansprüche, **dadurch gekennzeichnet, dass** das Bearbeitungswerkzeug ein Feinbearbeitungswerkzeug, insbesondere eine Leimfugenziehklinge, ist.

11. Bearbeitungsvorrichtung nach einem der vorhergehenden Ansprüche, **dadurch gekennzeichnet, dass** die Tasteinrichtung (3) ein Tastschuh oder eine Tastrolle ist.

12. Bearbeitungsvorrichtung nach einem der vorherigen Ansprüche, **dadurch gekennzeichnet, dass** die Vorrichtung ferner eine Regeleinrichtung und das Bearbeitungswerkzeug (2) einen Drucksensor aufweist, der mit der Regeleinrichtung verbunden ist, wobei die Regeleinrichtung die Zustellpositionierung des Bearbeitungswerkzeugs (2) zu einem zu bearbeitenden Werkstück über den Drucksensor und über die Mikroverstelleinrichtung (4) druckregelt.

13. Bearbeitungsvorrichtung nach einem der vorherigen Ansprüche, **dadurch gekennzeichnet, dass** die Bearbeitungswerkzeugverstellung während des Bearbeitungsbetriebes erfolgen kann.

## Claims

1. Processing apparatus for a workpiece, wherein the workpiece is preferably in at least one section made of wood, derived timber products, plastic or the like, having:
a processing tool (2) for processing a workpiece;
a sensing device (3) by means of which a predetermined feed position of the processing tool (2) relative to a workpiece section being processed is obtainable;
a conveying device for bringing about a relative movement between processing tool (2) and workpiece;
wherein the apparatus further has a microadjusting device (4) by means of which a relative displacement between the processing tool (2) and the sensing device (3) is obtainable,
**characterised in that**
the microadjusting device (4) has a fluid-operated adjusting device, so that the relative displacement can be brought about by means of a fluid, and the microadjusting device (4) has a fluid receptacle with at least one elastically deformable boundary surface (11), in particular a diaphragm, and a pressure-varying device for varying a fluid pressure in the fluid receptacle, wherein the sensing device (3) is connected to the elastically deformable boundary surface (11) and, as a result of pressure variation of a fluid in the fluid receptacle, a relative displacement between at least one portion of the elastically deformable boundary surface (11) and the centre of gravity (14) of the fluid receptacle is obtainable.

2. Processing apparatus for a workpiece, wherein the workpiece is preferably in at least one section made of wood, derived timber products, plastic or the like, having:
a processing tool (2) for processing a workpiece;
a sensing device (3) by means of which a predetermined feed position of the processing tool (2) relative to a workpiece section being processed is obtainable;
a conveying device for bringing about a relative movement between processing tool (2) and workpiece;
wherein the apparatus further has a microadjusting device (4) by means of which a relative displacement between the processing tool (2) and the sensing device (3) is obtainable,
**characterised in that**
the microadjusting device has a piezoactuator and/or plunger coil actuator for bringing about a relative displacement between the processing tool (2) and the sensing device (3).

3. Processing apparatus according to claim 1, **characterised in that** the sensing device (3) is the elastically deformable boundary surface (11).

4. Processing apparatus according to claim 1 or 3, **characterised in that** the centre (13) of the elastically deformable boundary surface (11) shows the greatest degree of displacement (L) of all points of the boundary surface (11) when a fluid pressure changes in the fluid receptacle, and the displacement of the centre is preferably proportional to the pressure variation in the fluid receptacle.

5. Processing apparatus according to any of claims 1, 3 and 4, **characterised in that** the elastically deformable surface (11) is planar and exhibits no curvature in the resting state in which the fluid pressure in the fluid receptacle is equal to the ambient pressure.

6. Processing apparatus according to any of claims 1, 3, 4 and 5, **characterised in that** the fluid receptacle has a cylindrical shape and the bottom surface and/or top surface of the cylinder forms the elastically deformable surface.

7. Processing apparatus according to any of claims 1 and 3 to 6, **characterised in that** the pressure variation in the fluid receptacle is effected by means of a cylinder and/or a servo pressure valve.

8. Processing apparatus according to claims 6 and 7, **characterised in that** the fluid receptacle has a cylindrical shape and the pressure variation is effected by means of a cylinder, wherein the fluid receptacle and the cylinder are designed as a single component or unit.

9. Processing apparatus according to any of claims 1 and 3 to 8, **characterised in that** the fluid is liquid, in particular oil.

10. Processing apparatus according to any of the preceding claims, **characterised in that** the processing tool is a fine processing tool, in particular a glue joint scraper.

11. Processing apparatus according to any of the preceding claims, **characterised in that** the sensing device (3) is a sensing block or a sensing roller.

12. Processing apparatus according to any of the preceding claims, **characterised in that** the apparatus further has a regulating device and the processing tool (2) has a pressure sensor which is connected to the regulating device, wherein the regulating device pressure-regulates the feed position of the processing tool (2) relative to a workpiece to be processed by means of the pressure sensor and by means of the microadjusting device (4).

13. Processing apparatus according to any of the preceding claims, **characterised in that** adjustment of the processing tool can be effected during processing.

## Revendications

1. Dispositif d'usinage pour une pièce à usiner, dans lequel la pièce à usiner est constituée de manière préférée au moins par endroits de bois, de matériaux dérivés du bois, d'une matière plastique ou similaire, comprenant :
un outil d'usinage (2) pour usiner une pièce à usiner;
un système de balayage (3), au moyen duquel un positionnement de rapprochement prédéterminé de l'outil d'usinage (2) en direction d'une section de pièce à usiner en cours d'usinage peut être obtenu ;
un système de transport pour provoquer un déplacement relatif entre l'outil d'usinage (2) et la pièce à usiner;
dans lequel le dispositif présente en outre un système de micro-ajustement (4), au moyen duquel un ajustement relatif entre l'outil d'usinage (2) et le système de balayage (3) peut être obtenu,
**caractérisé en ce**
**que** le système de micro-ajustement (4) présente un système d'ajustement actionné par un fluide, de sorte que le coulissement relatif peut être provoqué par l'intermédiaire d'un fluide, et
**que** le système de micro-ajustement (4) présente un contenant de fluide comprenant au moins une surface de délimitation (11) pouvant être déformée élastiquement, en particulier une membrane, et un système de modification de pression pour modifier une pression de fluide dans le contenant de fluide, dans lequel le système de balayage (3) est relié à la surface de délimitation (11) pouvant être déformée élastiquement et un coulissement relatif entre au moins une partie de la surface de délimitation (11) pouvant être déformée élastiquement et le centre de gravité (14) du contenant de fluide pouvant être obtenu par une modification de pression d'un fluide dans le contenant de fluide.

2. Dispositif d'usinage pour une pièce à usiner, dans lequel la pièce à usiner est constituée de manière préférée, au moins par endroits, de bois, de matériaux dérivés du bois, de matière plastique ou similaire, comprenant :
un outil d'usinage (2) pour usiner une pièce à usiner;
un système de balayage (3), au moyen duquel un positionnement de rapprochement prédéterminé de l'outil d'usinage (2) en direction de la section de pièce à usiner en cours d'usinage peut être obtenu ;
un système de transport pour provoquer un déplacement relatif entre l'outil d'usinage (2) et la pièce à usiner;
dans lequel le dispositif présente en outre un système de micro-ajustement (4), au moyen duquel un ajustement relatif entre l'outil d'usinage (2) et le système de balayage (3) peut être obtenu,
**caractérisé en ce**
**que** le système de micro-ajustement présente un actionneur piézoélectrique et/ou un actionneur à bobine mobile pour provoquer un ajustement relatif entre l'outil d'usinage (2) et le système de balayage (3).

3. Dispositif d'usinage selon la revendication 1, **caractérisé en ce que** le système de balayage (3) est la surface de délimitation (11) pouvant être déformée élastiquement.

4. Dispositif d'usinage selon la revendication 1 ou 3, **caractérisé en ce que** le point central (13) de la surface de délimitation (11) pouvant être déformée élastiquement présente, lors d'une modification de pression d'un fluide dans le contenant de fluide, la valeur de coulissement (L) la plus grande de tous les points de la surface de délimitation (11), et **en ce que** le coulissement du point central est de manière préférée proportionnel à la modification de pression dans le contenant de fluide.

5. Dispositif d'usinage selon l'une quelconque des revendications 1, 3 et 4, **caractérisé en ce que** la surface (11) pouvant être déformée élastiquement est plane dans l'état de repos, dans lequel la pression de fluide dans le contenant de fluide est égale à la pression environnante, et ne présente aucune incurvation.

6. Dispositif d'usinage selon l'une quelconque des revendications 1, 3, 4 et 5, **caractérisé en ce que** le contenant de fluide présente une forme cylindrique, et **en ce que** la surface de fond et/ou la surface de couverture du cylindre constitue la surface pouvant être déformée élastiquement.

7. Dispositif d'usinage selon l'une quelconque des revendications 1 et 3 à 6, **caractérisé en ce que** la modification de pression dans le contenant de fluide est effectuée par l'intermédiaire d'un cylindre et/ou d'une servo-soupape de pression.

8. Dispositif d'usinage selon les revendications 6 et 7, **caractérisé en ce que** le contenant de fluide présente une forme cylindrique, et **en ce que** la modification de pression est effectuée par l'intermédiaire d'un cylindre, dans lequel le contenant de fluide et le cylindre sont réalisés sous la forme d'un composant ou d'un groupe modulaire.

9. Dispositif d'usinage selon l'une quelconque des revendications 1 et 3 à 8, **caractérisé en ce que** le fluide est liquide, en particulier est de l'huile.

10. Dispositif d'usinage selon l'une quelconque des revendications précédentes, **caractérisé en ce que** l'outil d'usinage est un outil d'usinage de précision, en particulier un racloir de joints de colle.

11. Dispositif d'usinage selon l'une quelconque des revendications précédentes, **caractérisé en ce que** le système de balayage (3) est un patin de balayage ou un rouleau de balayage.

12. Dispositif de balayage selon l'une quelconque des revendications précédentes, **caractérisé en ce que** le dispositif présente en outre un système de réglage, et **en ce que** l'outil d'usinage (2) présente un capteur de pression, qui est relié au système de réglage, dans lequel le système de réglage règle par pression le positionnement de rapprochement de l'outil d'usinage (2) en direction d'une pièce à usiner par l'intermédiaire du capteur de pression et par l'intermédiaire du système de micro-ajustement (4).

13. Dispositif d'usinage selon l'une quelconque des revendications précédentes, **caractérisé en ce que** l'ajustement d'outil d'usinage peut être effectué au cours du mode d'usinage.
